# EUROPÄISCHE PATENTANMELDUNG

(11) **EP 3 970 895 A1**
(43) Veröffentlichungstag der Anmeldung: **23.03.2022**
(21) Anmeldenummer: 20196640.5
(22) Anmeldetag: 17.09.2020
(51) Int. Cl.: B23K 9/09, B23K 9/095, B23K 9/10, B23K 9/167, B23K 9/173, B23K 9/32

(54) **VERFAHREN ZU SYNCHRONISATION VON SCHWEISSSTRÖMEN, SOWIE SCHWEISSSTROMQUELLE UND SYSTEM MIT ZUMINDEST ZWEI SCHWEISSSTROMQUELLEN**

(71) Anmelder: FRONIUS INTERNATIONAL GmbH, 4643 Pettenbach (AT)
(72) Erfinder: ARTELSMAIR, Josef, 4643 Pettenbach (AT); LATTNER, Peter, 4643 Pettenbach (AT)
(74) Vertreter: SONN Patentanwälte OG

(57) **Zusammenfassung**

Die Erfindung betrifft ein Verfahren zur Synchronisation von Schweißströmen zumindest zweier Schweißstromquellen (1, 2) vor Durchführung eines simultanen Schweißprozesses an zumindest einem Werkstück (10), insbesondere eines Schweißprozesses mit nicht abschmelzbaren Elektroden (9), wobei das Verfahren folgende Schritte aufweist: Ausgeben eines Referenzsignals durch eine erste Schweißstromquelle (1), wobei das Referenzsignal eine Synchronisationsinformation enthält, Messen oder Empfangen des Referenzsignals und Auswerten der im Referenzsignal enthaltenen Synchronisationsinformation durch eine zweite Schweißstromquelle (2), und Synchronisieren eines zweiten Schweißstromes der zweiten Schweißstromquelle (2) mit einem ersten Schweißstrom der ersten Schweißstromquelle (1) auf Basis der Synchronisationsinformation. Des Weiteren betrifft die Erfindung eine Schweißstromquelle (1, 2) und ein System mit zumindest zwei Schweißstromquellen (1, 2).

## Beschreibung

Die Erfindung betrifft ein Verfahren zur Synchronisation von Schweißströmen zumindest zweier Schweißstromquellen zur Durchführung eines simultanen Schweißprozesses an zumindest einem Werkstück, insbesondere eines Schweißprozesses mit nichtabschmelzbaren Elektroden.

Des Weiteren betrifft die Erfindung eine Schweißstromquelle zur Durchführung eines simultanen Schweißprozesses an zumindest einem Werkstück, insbesondere eines Schweißprozesses mit nichtabschmelzbaren Elektroden, sowie ein System mit zumindest zwei Schweißstromquellen.

Bei der Herstellung von (Aluminium-)Tanks, Tonnen oder Silos werden häufig simultane Schweißprozesse mit mehreren AC-Schweißstromquellen durchgeführt. Dabei werden die Kanten oder Stöße der Tanks, Tonnen oder Silos gleichzeitig von zwei Seiten - meist von Innen und Außen - verschweißt. Ein Schweißprozess dieser Art ist beispielsweise in CN 101474709 B oder in CN 104096954 A gezeigt.

Die von AC-Schweißstromquellen erzeugten Schweißströme werden üblicherweise mit einem Außenleiter bzw. einer Phase des Wechselstromnetzes, an das die Schweißstromquellen angeschlossen sind, synchronisiert. Bei simultanen Schweißprozessen mit mehreren AC-Schweißstromquellen kann es passieren, dass ein Schweißstrom bzw. ein Lichtbogen zumindest zeitweise vom Werkstück auf eine Elektrode eines anderen Schweißbrenners überspringt, wenn die Schweißströme der AC-Schweißstromquellen mit unterschiedlichen Außenleitern des Wechselstromnetzes oder mit unterschiedlichen Synchronisationszeitpunkten (z.B. Nulldurchgängen des Spannungsverlaufs) des Außenleiters synchronisiert sind und die Elektroden der Schweißbrenner räumlich nahe aneinander geführt werden. Im Extremfall liegt bei nicht synchronisierten Schweißströmen an der Elektrode des einen Schweißbrenners eine positive Spannung und an der Elektrode des anderen Schweißbrenners eine negative Spannung an, sodass während des Schweißprozesses aufgrund der erwähnten unterschiedlichen Polarität und/oder einer räumlichen Berührung der Lichtbögen ein wechselseitiges Überspringen der Schweißströme vom Werkstück auf die jeweils andere Elektrode stattfindet.

Ein Überspringen von Schweißströmen auf eine andere Elektrode kann abhängig von der Dauer den Schweißprozess stören oder gar verunmöglichen. Um daher ein Überspringen der Schweißströme zu vermeiden, ist bei Schweißstromquellen aus dem Stand der Technik daher oftmals eine Umschalteinrichtung vorgesehen, die es ermöglicht, den Schweißstrom der Schweißstromquelle mit einem anderen Außenleiter des Wechselstromnetzes oder einem anderen Nulldurchgang des Spannungsverlaufs zu synchronisieren. Mit der Umschalteinrichtung kann eine Schweißstromquelle händisch so lange umgeschaltet werden, bis die Schweißströme der Schweißstromquellen synchronisiert sind und kein Überspringen der Schweißströme mehr stattfindet. Eine Kontrolle, ob die Schweißströme synchronisiert sind, erfolgt bislang durch eine Sichtkontrolle des Schweißers. Vielfach ist jedoch eine falsche Synchronisation von Schweißströmen nur schwer erkennbar. Typischerweise werden die Schweißströme mit den Nulldurchgängen im Spannungsverlauf eines Außenleiters synchronisiert. Bei einem dreiphasigen Wechselstromnetz ergeben sich auf Grund der Nulldurchgänge der Phasenspannungen des Wechselstromnetzes typischerweise insgesamt sechs mögliche Synchronisationszeitpunkte. Entsprechend schwierig und aufwendig gestaltet sich daher eine manuelle Einstellung der Schweißstromsynchronisation.

Im Lichte dieser Ausführungen ist es Aufgabe der vorliegenden Erfindung, die Nachteile des Standes der Technik zu lindern oder gar gänzlich zu beseitigen. Insbesondere ist es Aufgabe der vorliegenden Erfindung, die Synchronisation der Schweißströme von zumindest zwei Schweißstromquellen zu vereinfachen.

Gelöst wird diese Aufgabe durch ein Verfahren nach Anspruch 1, durch eine Schweißstromquelle nach Anspruch 13 und ein System mit zumindest zwei Schweißstromquellen nach Anspruch 15.

Erfindungsgemäß sind bei einem Verfahren der eingangs beschriebenen Art folgende Schritte vorgesehen:
- Ausgeben eines Referenzsignals durch eine erste Schweißstromquelle, wobei das Referenzsignal eine Synchronisationsinformation enthält;
- Messen oder Empfangen des Referenzsignals und Auswerten der im Referenzsignal enthaltenen Synchronisationsinformation durch eine zweite Schweißstromquelle;
- Synchronisieren eines zweiten Schweißstromes der zweiten Schweißstromquelle mit einem ersten Schweißstrom der ersten Schweißstromquelle auf Basis der Synchronisationsinformation.

Vorteilhafterweise kann mit Hilfe des erfindungsgemäßen Verfahrens eine zuverlässige und automatische Synchronisation von Schweißströmen von zumindest zwei Schweißstromquellen durchgeführt werden. Ein händisches Einstellen bzw. Umschalten und Kontrollieren der Schweißstromquellen wie beim Stand der Technik ist daher nicht mehr notwendig. Die Synchronisierung der Schweißströme findet vor Beginn des Schweißprozesses statt, also bevor die Schweißströme zur Durchführung des Schweißprozesses ausgegeben werden. Das Referenzsignal der ersten Schweißstromquelle für die Synchronisation kann leitungsgebunden oder mittels Funkverbindung von der ersten Schweißstromquelle an die zweite Schweißstromquelle übertragen werden. "Leitungsgebunden" bedeutet in diesem Zusammenhang, dass das Referenzsignal über eine elektrische Leitungsverbindung von der ersten Schweißstromquelle an die zweite Schweißstromquelle übermittelt wird. Insbesondere kann vorgesehen sein, dass das Referenzsignal über eine Versorgungsleitung eines an die erste Schweißstromquelle angeschlossenen ersten Schweißbrenners und über eine Versorgungsleitung eines an die zweite Schweißstromquelle angeschlossenen zweiten Schweißbrenners zur zweiten Schweißstromquelle geleitet wird. Zu diesem Zweck müssen der erste und der zweite Schweißbrenner, insbesondere deren Elektroden, vorrübergehend miteinander in elektrischen Kontakt gebracht werden, sodass eine elektrische Verbindung zwischen der ersten und der zweiten Schweißstromquelle hergestellt wird. Alternativ kann vorgesehen sein, dass das Referenzsignal von der ersten Schweißstromquelle auf die zweite Schweißstromquelle über eine dedizierte, von den Schweißbrennern unabhängige Datenverbindungsleitung übertragen wird. Wenn das Referenzsignal über eine Funkverbindung übertragen wird, kann vorgesehen sein, dass die erste und die zweite Schweißstromquelle jeweils eine Sende- und/oder Empfangseinheit aufweisen. Da das Referenzsignal von der ersten Schweißstromquelle an die zweite Schweißstromquelle übertragen wird, kann die erste Schweißstromquelle als "Master" oder "Lead" und die zweite Schweißstromquelle als "Slave" oder "Trail" bezeichnet werden. Das Referenzsignal ist vorzugsweise ein elektrisches Spannungssignal. Zur Synchronisation der Schweißströme beinhaltet das Referenzsignal eine Synchronisationsinformation. Auf Basis dieser Synchronisationsinformation können die Schweißströme zeitlich synchronisiert werden, wobei die erste Schweißstromquelle die Synchronisation vorgibt. Die Synchronisationsinformation kann beispielsweise in der Form des Referenzsignals, insbesondere im zeitlichen Verlauf des Referenzsignals, enthalten sein. Beispielsweise kann die Synchronisationsinformation in der Frequenz bzw. Periodizität, im Phasenwinkel, in der Amplitude und/oder in der Polarität des Referenzsignals enthalten sein. Vorzugsweise ermöglicht die Synchronisationsinformation eine Synchronisation der Schweißströme dahingehend, dass diese in Frequenz bzw. Periodizität, Phasenwinkel und Polarität im Wesentlichen übereinstimmen. Vorzugsweise liegt die Synchronisationsinformation in der Periodizität und Polarität des Referenzsignals. Das Referenzsignal kann demnach einen Takt vorgeben, der von der zweiten Schweißstromquelle ausgewertet und übernommen wird. Die Übertragung des Referenzsignals findet vor dem Schweißprozess statt, sodass die Schweißströme bereits vor deren Ausgabe für den Schweißprozess synchronisiert werden können. Die Synchronisation der Schweißströme bleibt erhalten, nachdem das Referenzsignal übertragen wurde. Die zweite Schweißstromquelle speichert die Synchronisationsinformation ab und hält die Synchronisation aufrecht. In einer Ausführungsform ist das Referenzsignal ein periodisches Spannungssignal, wobei ein bestimmtes Spannungsniveau des Referenzsignals, zum Beispiel Nulldurchgänge, Minima oder Maxima, oder Flanken des Referenzsignals zur Synchronisation der Schweißströme genutzt werden. Die Synchronisationsinformation kann alternativ auch in Form einer Nachricht, beispielsweise in Form eines Zeitstempels, eines Start-Befehls, in dem Referenzsignal enthalten sein. Das Referenzsignal wird von der zweiten Schweißstromquelle gemessen oder empfangen und anschließend ausgewertet. Dabei wird insbesondere die Synchronisationsinformation ausgewertet. Auf Basis der ausgewerteten Synchronisationsinformation kann der zweite Schweißstrom mit dem ersten Schweißstrom synchronisiert werden. "Synchronisiert" bedeutet in diesem Zusammenhang, dass die Zeitverläufe der Schweißströme aufeinander abgestimmt werden. Vorzugsweise bedeutet "synchronisiert", dass die Phasenwinkel, Polaritäten und Frequenzen der Schweißströme aufeinander abgestimmt sind, insbesondere im Wesentlichen ident sind. Die Amplituden der Schweißströme können aber unterschiedlich sein. Die Phasenverschiebung zwischen den Schweißströmen soll nach der Synchronisation im Wesentlichen 0° betragen. In einer bevorzugten Ausführungsform wird ein externer Taktgeber, wie beispielsweise ein Außenleiter eines gemeinsamen Wechselstromnetzes, zur Erhaltung der Synchronität herangezogen. Die Außenleiter bzw. der ausgewählte Außenleiter können sowohl von der ersten, als auch von der zweiten Schweißstromquelle als Taktgeber genutzt werden. Insbesondere können beispielsweise periodische Synchronisationszeitpunkte eines Spannungsverlaufs eines Außenleiters eines Wechselstromnetzes, beispielsweise Nulldurchgänge, Minima oder Maxima der Spannung, zur Synchronisation der Schweißströme genutzt werden. Durch Übertragung des Referenzsignals kann der zweiten Schweißstromquelle beispielsweise mitgeteilt werden, welcher Außenleiter und welche periodischen Synchronisationszeitpunkte im Spannungsverlauf des Außenleiters zur Synchronisation der Schweißströme genutzt werden sollen. Zur Synchronisation der Schweißströme ist es noch nicht notwendig, die Schweißströme auch tatsächlich zu erzeugen und auszugeben. Der Schweißprozess, bei dem die synchronisierten Schweißströme erzeugt und ausgegeben werden, kann nach der Synchronisation durchgeführt werden. Da die Synchronisation von Schweißströmen insbesondere bei AC-Schweißprozessen eine wichtige Rolle spielt, kann es sich bei dem simultanen Schweißprozess um einen AC-Schweißprozess, insbesondere mit nichtabschmelzbaren Elektroden, handeln. Beispielsweise kann der Schweißprozess ein WIG-AC-Schweißprozess (WIG = Wolfram-Inertgas; AC = engl. Alternating Current, also Wechselstrom) sein. Als Schweißstromquellen können somit insbesondere AC-Schweißstromquellen, die Wechselströme als Schweißströme erzeugen, vorgesehen sein. Unter Schweißstromquelle sind alle Arten von Schweißquellen, also auch spannungsgesteuerte Schweißquellen, zu verstehen.

Bevorzugt ist, wenn nach der Synchronisation die Synchronisationsinformation in der ersten Schweißstromquellen und in der zweiten Schweißstromquelle gespeichert wird. Die Synchronisationsinformation kann jeweils in einer Synchronisationseinheit der Schweißstromquellen gespeichert werden. Dadurch kann die Synchronisation erhalten bleiben.

In einer Ausführungsform ist vorgesehen, dass nach der Synchronisation des ersten und des zweiten Schweißstromes der erste und der zweite Schweißstrom erzeugt werden und der Schweißprozess durchgeführt wird. Mit anderen Worten wird nach der Synchronisation mit den synchronisierten Schweißströmen der Schweißprozess durchgeführt.

Vorzugsweise ist die Synchronisationsinformation in einem zeitlichen Verlauf des Referenzsignals, insbesondere in einer Frequenz, in einer wechselnden Polarität und/oder in einem Phasenwinkel des Referenzsignals, enthalten. Vorzugsweise ist das Referenzsignal ein periodisches Signal. Beispielsweise kann das Referenzsignal ein sinusförmiges Signal, ein rechteckförmiges Signal oder ein Signal mit periodischen Pulsen sein. Das Referenzsignal kann ein Tastverhältnis ungleich 50% aufweisen. Durch das Tastverhältnis können weitere Informationen an die zweite Schweißstromquelle übertragen werden. Beispielsweise kann durch das Tastverhältnis des Referenzsignals der zweiten Schweißstromquelle die Einschaltzeit der Schweißströme innerhalb einer Periode mitgeteilt werden. Bestimmte Signalniveaus des Referenzsignals, beispielsweise Nulldurchgänge, Minima oder Maxima, oder Flanken des Referenzsignals können durch die zweite Schweißstromquelle detektiert und ausgewertet werden und auf deren Basis die Synchronisation des zweiten Schweißstromes vorgenommen werden. Anhand der Nulldurchgänge des Referenzsignals kann die Periodizität des Referenzsignals auf besonders einfache Weise festgestellt werden.

Wie eingangs erwähnt, ist es bei AC-Schweißstromquellen üblich, die Schweißströme mit einem Außenleiter eines Wechselstromnetzes zu synchronisieren. Probleme können beispielsweise auftreten, wenn bei einem simultanen Schweißprozess mit mehreren Schweißstromquellen die Schweißströme mit unterschiedlichen Außenleitern des Wechselstromnetzes synchronisiert sind. In einer besonders bevorzugten Ausführungsform ist daher vorgesehen, dass die erste und die zweite Schweißstromquelle an ein gemeinsames Wechselstromnetz, insbesondere an ein dreiphasiges Wechselstromnetz, angeschlossen werden und zur Synchronisation der Schweißstromquellen ein Außenleiter des Wechselstromnetzes durch die erste Schweißstromquelle ausgewählt wird und das Referenzsignal auf Basis eines Spannungsverlaufs des ausgewählten Außenleiters erzeugt wird, sodass die Synchronisationsinformation eine Identifikation des durch die erste Schweißstromquelle ausgewählten Außenleiters durch die zweite Schweißstromquelle ermöglicht. Der Spannungsverlauf des Außenleiters kann beispielsweise gegen einen Neutralleiter oder einen anderen Außenleiter gemessen werden. Vorzugsweise ist dabei vorgesehen, dass das Referenzsignal mit dem Spannungsverlauf des ausgewählten Außenleiters, insbesondere in der Periode, synchronisiert wird. Dadurch ist es auf besonders einfache Weise möglich, den ausgewählten Außenleiter durch die zweite Schweißstromquelle zu identifizieren, indem das Referenzsignal ausgewertet und mit den Spannungsverläufen der Außenleiter verglichen wird. Es ist aber nicht notwendig, dass das Referenzsignal die gleiche Form aufweist wie der Spannungsverlauf des ausgewählten Außenleiters. Vorzugsweise wird bei dieser Ausführungsform zunächst ein Außenleiter bzw. eine Phase des Wechselstromnetzes durch die erste Schweißstromquelle ausgewählt, ein mit dem ausgewählten Außenleiter synchronisiertes Referenzsignal erzeugt, das Referenzsignal von der ersten Schweißstromquelle zur zweiten Schweißstromquelle übertragen, das Referenzsignal durch die zweite Schweißstromquelle ausgewertet und der ausgewählte Außenleiter auf Basis der Synchronisationsinformation identifiziert. Der erste und der zweite Schweißstrom können anschließend, wie sogleich beschrieben werden wird, mit dem ausgewählten Außenleiter, d.h. dem gleichen Außenleiter, synchronisiert werden. Somit können die Schweißströme auch nach der Übertragung des Referenzsignals weiterhin synchron gehalten werden, da der ausgewählte Außenleiter des Wechselstromnetzes den Takt vorgibt. Unter "Auswählen" ist in diesem Zusammenhang nicht zwingend ein Selektionsvorgang in dem Sinne zu verstehen, dass ein Schweißer einen Außenleiter bewusst auswählt. Vielmehr kann die (zufällige) Auswahl durch das Anschließen der ersten Schweißstromquelle an das Wechselstromnetz erfolgen. Ziel bei dieser Ausführungsform ist es, der zweiten Schweißstromquelle mitzuteilen, mit welchem Außenleiter, insbesondere mit welchen Nulldurchgängen oder mit welchem anderen periodischen Synchronisationszeitpunkt im Spannungsverlauf des ausgewählten Außenleiters, die Schweißströme der beiden Schweißstromquellen künftig synchronisiert werden sollen. Beispielsweise kann vorgesehen sein, dass die Schweißströme mit den Nulldurchgängen vor einer positiven Halbwelle oder den Nulldurchgängen vor einer negativen Halbwelle des Spannungsverlaufs des ausgewählten Außenleiters synchronisiert werden. Diese Information kann mit dem Referenzsignal der zweiten Schweißstromquelle mitgeteilt werden. Die Schweißströme können dadurch weiterhin synchron gehalten werden, auch wenn die Schweißstromquellen nach Übertragung des Referenzsignals nicht mehr miteinander kommunizieren können. Das Wechselstromnetz dient dabei als Basis für die Synchronität der Schweißströme.

Nach Identifikation des ausgewählten Außenleiters durch die zweite Schweißstromquelle können der erste Schweißstrom und der zweite Schweißstrom mit dem Spannungsverlauf des ausgewählten Außenleiters, insbesondere mit einem periodischen Synchronisationszeitpunkt des Spannungsverlaufs des ausgewählten Außenleiters, beispielsweise einem periodischen Nulldurchgang, synchronisiert werden. Bei dem periodischen Synchronisationszeitpunkt kann es sich im Allgemeinen um ein bestimmtes, regelmäßig wiederkehrendes Signalniveau des Spannungsverlaufs des ausgewählten Außenleiters handeln. Beispielsweise kann der periodische Synchronisationszeitpunkt ein Nulldurchgang, ein Minimum oder ein Maximum sein. Bei einem konkreten Ausführungsbeispiel kann beispielsweise vorgesehen sein, dass die positive Halbwelle der Schweißströme gestartet wird, sobald der Spannungsverlauf des ausgewählten Außenleiters einen Nulldurchgang vor einer positiven Halbwelle hat. Es ist aber ebenso denkbar, die positive Halbwelle der Schweißströme zu starten, sobald der Spannungsverlauf des ausgewählten Außenleiters einen Nulldurchgang vor einer negativen Halbwelle hat. Es kann auch vorgesehen sein, dass die Synchronisationsinformation eine Vorgabe zur Polarität der Schweißströme enthält.

Bevorzugt ist, wenn das Referenzsignal einen zeitlichen Verlauf, insbesondere eine Frequenz und eine Phasenlage und eine Polarität, aufweist, auf deren Basis der ausgewählte Außenleiter eindeutig identifizierbar ist. Die Synchronisationsinformation liegt hierbei somit im zeitlichen Verlauf des Referenzsignals. Das Referenzsignal kann mit dem ausgewählten Außenleiter synchron sein. Das Referenzsignal kann dabei aber eine andere Form und/oder ein anderes Tastverhältnis als der Spannungsverlauf des ausgewählten Außenleiters aufweisen.

Bei einer Ausführungsform der Erfindung ist vorgesehen, dass die Synchronisationsinformation die Identifikation eines periodischen Synchronisationszeitpunktes, beispielsweise eines periodischen Nulldurchgangs, im Spannungsverlauf des ausgewählten Außenleiter ermöglicht. Dies kann beispielsweise dadurch erfolgen, indem das Referenzsignal selbst einen charakteristischen periodischen Verlauf aufweist. Beispielsweise kann das Referenzsignal Pulse, Nulldurchgänge und/oder Flanken aufweisen, die mit bestimmten Nulldurchgängen des Spannungsverlaufs des ausgewählten Außenleiters zeitlich übereinstimmen. Beispielsweise kann vorgesehen sein, dass ein Nulldurchgang des Referenzsignals mit einer positiven Signalflanke einen periodischen Synchronisationszeitpunkt im Spannungsverlauf des ausgewählten Außenleiters markiert. Der erste und der zweite Schweißstrom können mit dem identifizierten periodischen Synchronisationszeitpunkt synchron gehalten werden. Der Takt wird demnach vom Wechselstromnetz vorgegeben. Vorzugsweise ist auch vorgesehen, dass die Synchronisationsinformation eine Vorgabe zur Polarität der Schweißströme enthält, sodass die Schweißströme auch in der Polarität aufeinander abgestimmt werden können.

Vorzugsweise wird die Synchronisationsinformation aus dem Spannungsverlauf des ausgewählten Außenleiters, insbesondere aus der Frequenz, der Polarität und/oder dem Phasenwinkel des ausgewählten Außenleiters, abgeleitet. Insbesondere kann vorgesehen sein, dass die abgeleitete Synchronisationsinformation zur Generierung des Referenzsignals genutzt wird und im Referenzsignal enthalten ist.

Eine besonders einfache und rasche Identifizierung des ausgewählten Außenleiters wird ermöglicht, wenn ein Verlauf des Referenzsignals in Frequenz, Polarität und/oder Phasenwinkel mit dem Spannungsverlauf des ausgewählten Außenleiters synchronisiert wird. Die Form und/oder das Tastverhältnis des Referenzsignals kann, aber muss allerdings nicht die Form des Spannungsverlaufs des ausgewählten Außenleiters aufweisen. Beispielsweise kann es sich bei dem Referenzsignal um ein periodisches Rechtecksignal oder ein Signal mit periodischen Pulsen handeln, während der Spannungsverlauf des ausgewählten Außenleiters sinusförmig ist.

Eine besonders einfache Art, das Referenzsignal zu übertragen ergibt sich, wenn das Referenzsignal von der ersten Schweißstromquelle über einen an die erste Schweißstromquelle angeschlossenen ersten Schweißbrenner, direkt oder indirekt an einen an die zweite Schweißstromquelle angeschlossenen zweiten Schweißbrenner und weiter an die zweite Schweißstromquelle geleitet wird. Insbesondere kann dabei vorgesehen sein, dass die Elektroden des ersten und des zweiten Schweißbrenners in elektrischen Kontakt gebracht werden, um das Referenzsignal zu übertragen. Alternativ kann auch vorgesehen sein, dass die Elektroden der Schweißbrenner das Werkstück berühren und dadurch ein elektrischer Kontakt zwischen den beiden Elektroden hergestellt wird.

Vorzugsweise werden die Stromstärke und die Spannungshöhe des Referenzsignals so gewählt, dass ein Aufschmelzen des Werkstückes, eines Schweißdrahtes oder der Elektroden vermieden wird.

In einer Ausführungsform ist vorgesehen, dass das Referenzsignal ein Spannungssignal, vorzugsweise ein Wechselsignal, insbesondere ein Rechtecksignal, ist.

Die oben gestellte Aufgabe wird auch durch eine Schweißstromquelle nach Anspruch 13 gelöst. Die Schweißstromquelle ist zur Durchführung eines simultanen Schweißprozesses an zumindest einem Werkstück, insbesondere eines Schweißprozesses mit nichtabschmelzbaren Elektroden, eingerichtet. Erfindungsgemäß weist die Schweißstromquelle eine Synchronisationseinheit auf, welche dazu eingerichtet ist, in einem ersten Modus zur Synchronisation mit einer weiteren gleichartigen Schweißstromquelle ein Referenzsignal mit einer Synchronisationsinformation zu erzeugen und an die weitere Schweißstromquelle auszugeben, und/oder in einem zweiten Modus ein von der weiteren Schweißstromquelle ausgegebenes Referenzsignal zu messen oder zu empfangen und die in dem Referenzsignal enthaltene Synchronisationsinformation auszuwerten und auf deren Basis einen Schweißstrom mit einem Schweißstrom der weiteren Schweißstromquelle zu synchronisieren. Demnach ist die erfindungsgemäße Schweißstromquelle dazu eingerichtet, als erste und/oder zweite Schweißstromquelle für das oben beschriebene Verfahren eingesetzt zu werden. Zur Ausführung des oben beschriebenen Verfahrens wird somit zumindest eine Schweißquelle, die im ersten Modus betrieben werden kann, und eine Schweißstromquelle, die im zweiten Modus betrieben werden kann, eingesetzt. In einer demgegenüber bevorzugten Ausführungsform ist vorgesehen, dass die Schweißstromquelle sowohl im ersten, als auch im zweiten Modus betreibbar ist. Eine solche Schweißstromquelle kann dabei vorteilhafterweise zwischen dem ersten und dem zweiten Modus umschaltbar sein. Zur Ausführung des oben beschriebenen Verfahrens können bei dieser Variante vorteilhafterweise zwei gleichartige Schweißstromquellen eingesetzt werden. Eine der Schweißstromquellen kann im Sinne des Verfahrens als erste Schweißstromquelle eingesetzt werden, indem diese im ersten Modus betrieben wird. Eine andere Schweißstromquelle kann im Sinne des Verfahrens als zweite Schweißstromquelle eingesetzt werden, indem diese im zweiten Modus betrieben wird. Die erste Schweißstromquelle fungiert dabei als "Master" oder "Lead", während die zweite Schweißstromquelle als "Slave" oder "Trail" betrieben wird. Die Synchronisationseinheit kann durch eine Berechnungseinheit, insbesondere durch einen Mikroprozessor, gebildet sein. In Bezug auf die Merkmale und Vorteile des Verfahrens wird auf die obigen Ausführungen verwiesen, die auch für die Schweißvorrichtung gelten.

Die Synchronisationseinheit kann im ersten Modus dazu eingerichtet sein, das Referenzsignal auf Basis eines Spannungsverlaufs eines ausgewählten Außenleiters eines Wechselstromnetzes zu erzeugen. Das Referenzsignal kann beispielsweise in Frequenz und Periode mit dem Spannungsverlauf synchronisiert sein und dadurch eindeutig eine Identifizierung des ausgewählten Außenleiters zu ermöglichen.

Die Aufgabe wird zudem durch ein System mit zwei Schweißstromquellen gelöst, die jeweils wie oben beschrieben ausgebildet sind. Die Schweißstromquellen können bevorzugt derart ausgebildet sein, dass sie jeweils zwischen dem ersten und dem zweiten Modus umschaltbar sind. Alternativ kann eine der beiden Schweißstromquellen ausschließlich im ersten Modus und die andere Schweißstromquelle ausschließlich im zweiten Modus betrieben werden, wobei keine Umschaltmöglichkeit zum Wechseln zwischen den Modi vorliegt.

Im Folgenden wird die Erfindung an Hand von Figuren näher beschrieben, auf die sie allerdings nicht beschränkt sein soll. Es zeigen:
Fig. 1 eine erste und eine zweite Schweißstromquelle;
Fig. 2A-B schematisch einen simultanen Schweißprozess mit synchronisierten Schweißströmen;
Fig. 3A-B schematisch einen simultanen Schweißprozess mit nicht synchronisierten Schweißströmen; und
Fig. 4A-C schematisch die Synchronisation von Schweißströmen mit dem Außenleiter Uᵤ eines dreiphasigen Wechselstromnetzes, wobei die Spannungen der Außenleiter gegen den Neutralleiter dargestellt sind; und
Fig. 5A und Fig. 5B einen Verfahrensablauf zur Synchronisation zweier Schweißstromquellen.

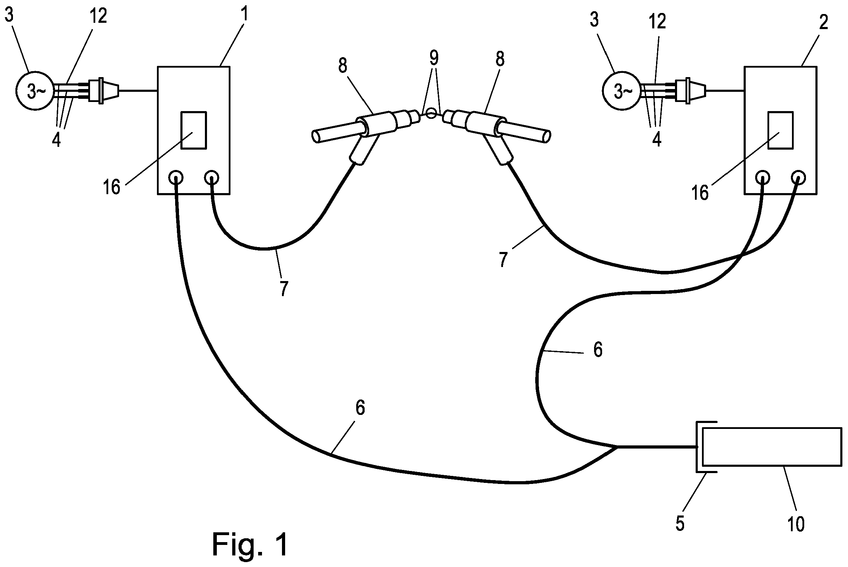

Fig. 1 zeigt eine erste Schweißstromquelle 1 und eine zweite Schweißstromquelle 2, die jeweils an ein symbolisch dargestelltes gemeinsames dreiphasiges Wechselstromnetz 3 mit drei Außenleitern 4 angeschlossen sind. Bei den beiden gezeigten Schweißstromquellen 1, 2 handelt es sich um WIG-AC-Schweißstromquellen zur Durchführung von Wolfram-Inertgas-Schweißprozessen mit Wechselströmen (AC). Selbstverständlich könnten die Sromquellen 1, 2 aber auch beispielsweise für Pulsschweißprozesse eingesetzt werden, welche sowohl mit Gleichstrom als auch mit Wechselstrom durchgeführt werden können. Die Schweißstromquellen 1, 2 sind jeweils über eine Verbindungsleitung 6 mit einer Masseklemme 5 und damit mit einem Werkstück 10 elektrisch verbunden. Des Weiteren ist an jede Schweißstromquelle 1, 2 jeweils über eine Versorgungsleitung 7 ein Schweißbrenner 8 mit einer Elektrode 9 angeschlossen. Die Verbindungsleitungen 6 können direkt miteinander verbunden sein oder es können die Werkstücke 10 über eine gemeinsame Auflage (nicht dargestellt) miteinander verbunden sein.

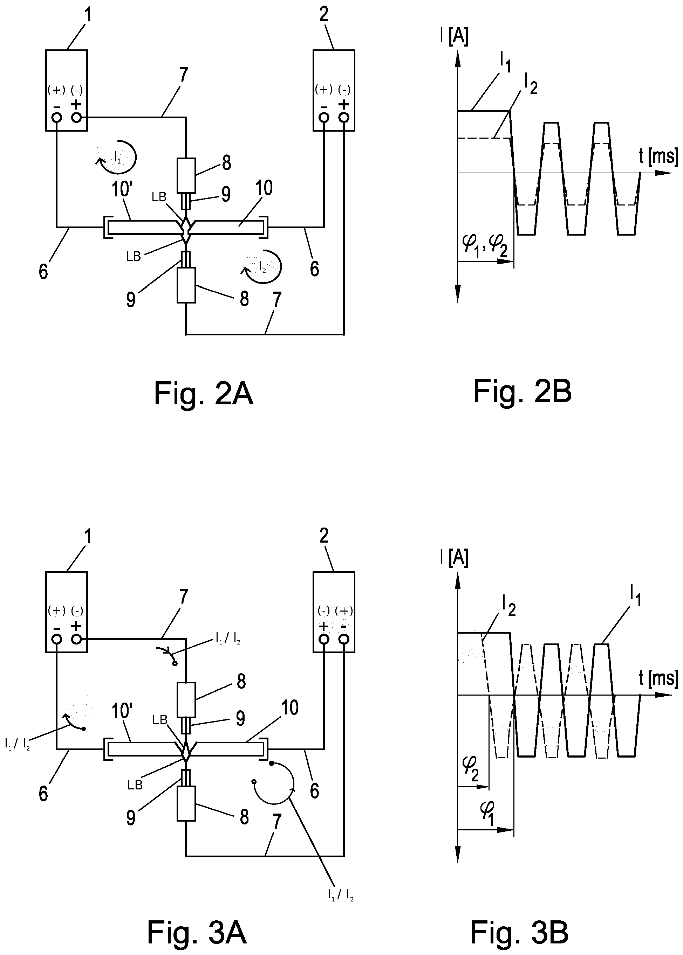

Typischerweise werden die von Schweißstromquellen erzeugten Schweißströme I₁, I₂ (siehe Fig. 2A, Fig. 3A) mit dem zeitlichen Spannungsverlauf U_{U,V,W} eines Außenleiters 4 des Wechselstromnetzes 3, insbesondere mit bestimmten Nulldurchgängen 14 (die als periodische Synchronisationszeitpunkte 15 dienen) eines Außenleiters 4, synchronisiert. Probleme können allerdings auftreten, wenn, wie oben beschrieben, bei einem Schweißprozess mehrere Schweißstromquellen 1, 2 verwendet werden und die erzeugten Schweißströme I₁, I₂ nicht synchronisiert sind. Dann kann es passieren, dass während eines Schweißprozesses der Lichtbogen LB nicht wie gewünscht auf ein zu schweißendes Werkstück 10 gerichtet ist, sondern auf Grund der entstehenden Spannungsdifferenz vom Werkstück 10 auf eine Elektrode 9 eines anderen Schweißbrenners 8 überspringt (siehe Fig. 3A). Das Überspringen ist insbesondere der Fall, wenn - wie dargestellt - ein Spalt zwischen den Werkstücken 10, 10' vorhanden ist. Dadurch resultiert eine Serienschaltung der Schweißstromquellen 1, 2 mit einem gemeinsamen Stromkreis. Dies kann den Schweißprozess stören bzw. gar verunmöglichen. Im Folgenden werden Nulldurchgänge 14 mit einer positiven Flanke mit einem + und Nulldurchgänge mit einer negativen Flanke mit einem - gekennzeichnet.

In Fig. 2A ist schematisch ein simultaner Schweißprozess an zwei Werkstücken 10, 10' veranschaulicht. Die beiden Werkstücke 10, 10', beispielsweise die Stirnseiten eines Rohres (nicht dargestellt), sollen mithilfe des simultanen Schweißprozesses miteinander verbunden werden. Zu diesem Zweck werden zwei Schweißstromquellen 1, 2 eingesetzt, wobei die Werkstücke 10, 10' an zwei gegenüberliegenden Seiten der Werkstücke 10, 10' mit den Schweißbrennern 8 gleichzeitig geschweißt werden. Die Werkstücke 10, 10' sind dazu über die Verbindungsleitungen 6 mit den Minus-Polen der Schweißstromquellen 1, 2 verbunden. Die Plus-Pole der Schweißstromquellen 1, 2 werden entsprechend mit den Schweißbrennern 8 verbunden. Die Pole können selbstverständlich auch getauscht sein bzw. wechselt die Polarität des Schweißstroms bei AC-Schweißprozesses periodisch - gemäß den Polaritätsbezeichnungen in Klammern (Fig. 2A und Fig. 3A). Wie bereits erwähnt, werden bei AC-Schweißstromquellen die erzeugten Schweißströme I₁, I₂ mit einem Außenleiter 4 des Wechselstromnetzes 3 synchronisiert. Wenn die Schweißströme I₁, I₂ mit demselben Außenleiter 4 bzw. denselben periodischen Synchronisationszeitpunkten 15 im Spannungsverlauf U_{U,V,W} des Außenleiters 4, synchronisiert sind, sind auch die Schweißströme I₁, I₂ zueinander synchron. Dieser Fall ist in Fig. 2B schematisch dargestellt. Fig. 2B zeigt synchronisierte Schweißströme I₁, I₂ in Ampere über der Zeit t in Millisekunden. Die Schweißströme I₁, I₂ sind in der Frequenz f und in den schematisch dargestellten Phasenwinkeln ϕ₁, ϕ₂ im Wesentlichen synchron. Die Amplitude der Schweißströme I₁, I₂ ist entsprechend an die Anwendung angepasst und kann selbstverständlich, wie dargestellt, auch unterschiedlich sein. Lediglich zur besseren Darstellung ist I₂ strichliert dargestellt.

In Fig. 2A ist zu erkennen, dass die Lichtbögen LB auf die Werkstücke 10, 10' gerichtet sind, um dort einen Wärmeeintrag zu erzielen. Die Schweißströme I₁, I₂ fließen jedoch in getrennten Stromkreisen - wie symbolisch dargestellt - über die jeweiligen Verdindungsleitungen 6,7 der jeweiligen Schweißtromquelle 1, 2.

Fig. 3A veranschaulicht einen Schweißprozess, bei dem die Schweißströme I₁, I₂ nicht synchronisiert sind (beispielsweise wegen einer Synchronisierung mit unterschiedlichen Nulldurchgängen 14 im Spannungsverlauf U_{U,V,W} eines Außenleiters 4). Es ist erkennbar, dass in diesem Fall die Lichtbögen LB nicht auf die Werkstücke 10, 10' gerichtet sind, sondern zumindest zeitweise auf die Elektrode 9 des jeweils anderen Schweißbrenners 8 gerichtet sind. Dadurch wird der Wärmeeintrag in die Werkstücke 10, 10' deutlich reduziert, und eine korrekte Schweißnahtausbildung verhindert. Die nicht synchronisierten Schweißströme I₁, I₂ sind in Fig. 3B schematisch in Ampere über der Zeit t in Millisekunden dargestellt. Es ist erkennbar, dass die Schweißströme I₁, I₂ zeitlich genau gegenphasig, also ϕ₁-ϕ₂=180° elektrisch versetzt zueinander, verlaufen. Die Polaritäten der Schweißströme I₁, I₂ stimmen somit nicht überein. Lediglich zur besseren Darstellung ist I₂ strichliert dargestellt. Die Schweißströme I₁, I₂ sind zwar in der Frequenz f, aber nicht in den Phasenwinkeln ϕ₁, ϕ₂ bzw. in der Polarität synchron. Die Amplituden der Schweißströme I₁, I₂ sind hier im Wesentlichen identisch dargestellt, da die Lichtbögen LB zueinander brennen und eine Serienschaltung der Schweißstromquellen 1,2 entsteht. Durch die Serienschaltung übernimmt eine der Schweißtromquellen 1, 2 die Einprägung eines Schweißstroms I₁ oder I₂ in den gemeinsamen Stromkreis. Symbolisch ist der Schweißstrom I₁ im gemeinsamen Stromkreis dargestellt.
Um die Polarität der Schweißströme I₁, I₂ der Schweißstromquellen 1, 2 zu synchronisieren und dadurch ein Überspringen bzw. Umleiten der Schweißströme I₁, I₂ vom Werkstück 10, 10' auf die Elektroden 9 zu verhindern, ist vorgesehen, vor dem Schweißprozess (also vor der Ausgabe der Schweißströme I₁, I₂) ein Referenzsignal 11 beispielsweise von der ersten Schweißstromquelle 1 an die zweite Schweißstromquelle 2 zu übertragen. Die Synchronisation, insbesondere das Erzeugen und Auswerten des Referenzsignals 11, kann mit Hilfe von in den Schweißstromquellen 1, 2 angeordneten Synchronisationseinheiten 16 (siehe Fig. 1) erfolgen. Auf Basis des Referenzsignals 11 können die Schweißströme I₁, I₂ miteinander synchronisiert werden. Das Referenzsignal 11 gibt bei der gezeigten Ausführungsform vor, mit welchem Außenleiter 4 und mit welchen im Spannungsverlauf U_{U,V,W} des Außenleiters 4 enthaltenen periodischen Synchronisationszeitpunkten 15 die Polarität, die Frequenz und die Phasenlage der Schweißströme I₁, I₂ synchronisiert werden sollen. Die Übertragung des Referenzsignals 11 zwischen den Schweißstromquellen 1, 2 kann beispielsweise vor dem Schweißprozess über die Schweißbrenner 8 erfolgen. Zu diesem Zweck können die Elektroden 9 der Schweißbrenner 8 in Berührung gebracht werden, bis das Referenzsignal 11 übertragen worden und die Synchronisation abgeschlossen ist. Die Berührung der Elektroden 9 ist in Fig. 1 dargestellt. Das Referenzsignal 11 wird demnach vor dem Schweißprozess übertragen.

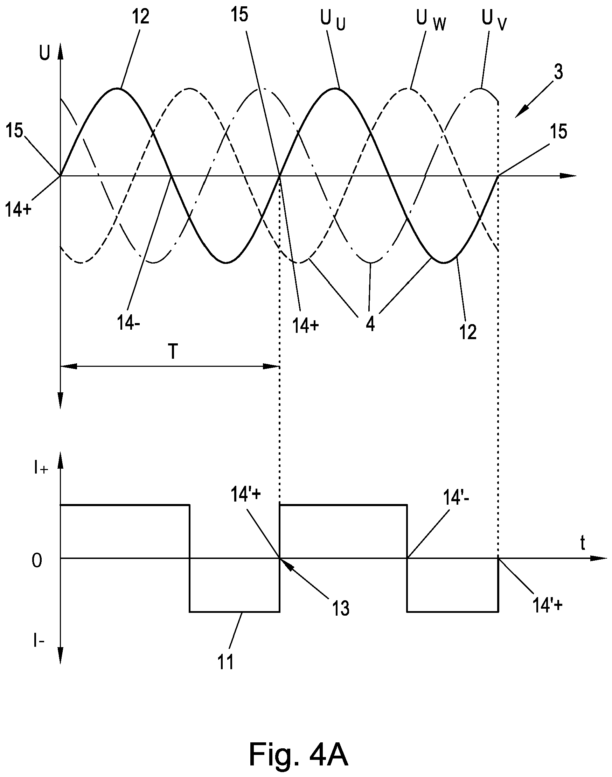

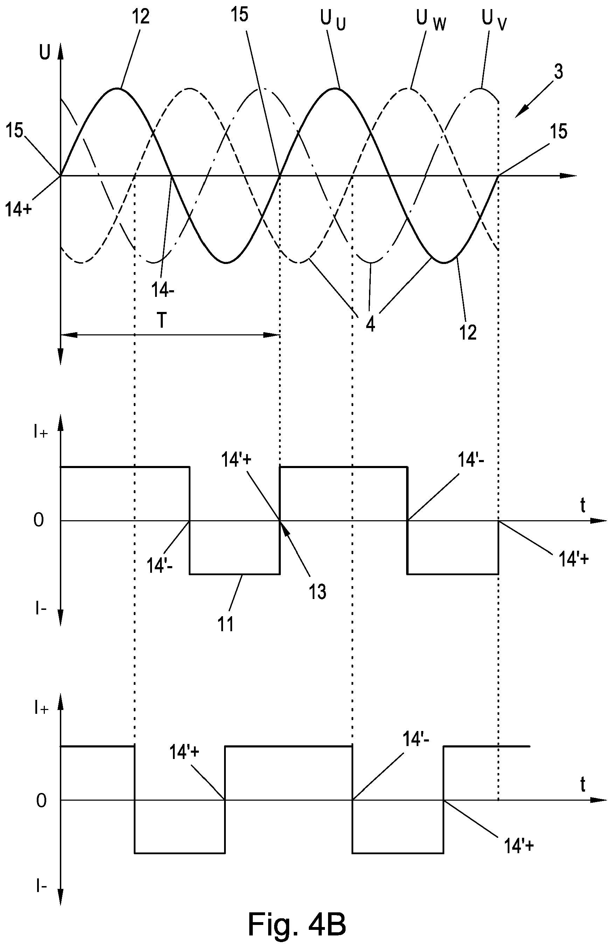

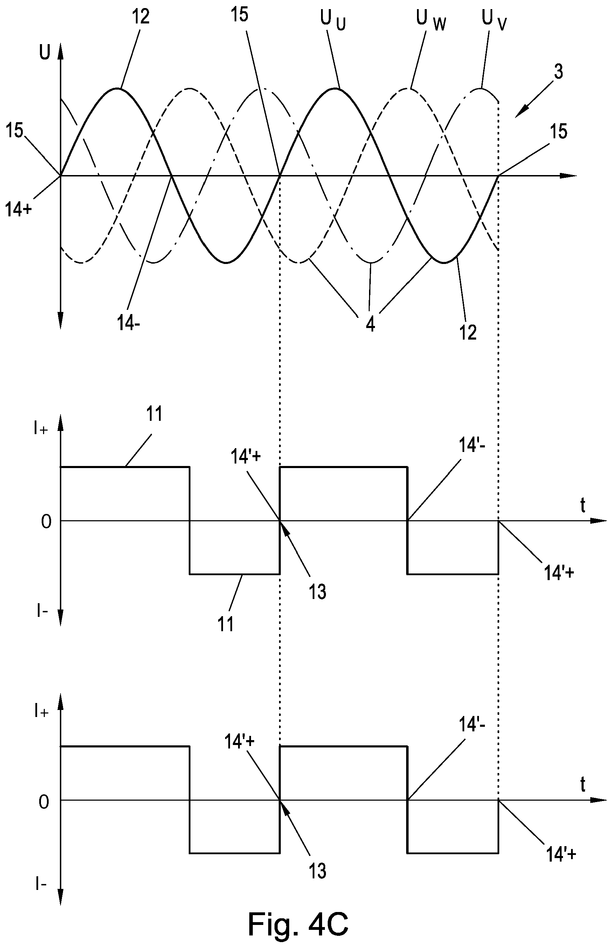

Der zeitliche Ablauf zur Synchronisation der Schweißströme I₁, I₂ in Bezug zu den Außenleitern ist in Fig. 4A-C dargestellt, wobei Fig. 4A das Referenzsignal 11 des Masters, Fig. 4B einen nicht synchronisierten Zustand und Fig. 4C einen synchronisierten Zustand der beiden Stromquellen 1, 2 veranschaulicht. Der zeitliche Ablauf ist als Messung zwischen den Außenleitern 4 und dem Neutralleiter dargestellt. Selbstverständlich kann die Messung auch zwischen den Außenleitern erfolgen. Ziel der gezeigten Ausführungsform ist es, der als "Slave" fungierenden zweiten Schweißstromquelle 2 mit Hilfe des Referenzsignals 11 vor dem Schweißprozess mitzuteilen, mit welchem Außenleiter 4, insbesondere mit welchen Nulldurchgängen 14 (allgemeiner: periodische Synchronisationszeitpunkten 15) des Spannungsverlaufs U_{U,V,W} des ausgewählten Außenleiters, die Schweißströme I₁, I₂ der beiden Schweißstromquellen 1, 2 künftig synchronisiert werden sollen. Auch weitere Informationen, wie Tastverhältnis und Amplitude der Schweißströme I₁, I₂ können der zweiten Schweißstromquelle 2 mitgeteilt werden. Das zu übertragende Referenzsignal 11 ist mit dem von der ersten Schweißstromquelle 1 ausgewählten Außenleiter 4 in Frequenz und Periode synchronisiert, wodurch der Außenleiter 4 auf Basis des Referenzsignals identifizierbar ist. Der ausgewählte Außenleiter 4 wird im Folgenden mit der Bezugsziffer 12 benannt. Die Schweißströme I₁, I₂ können bei der anschließenden Schweißung/dem Schweißprozess durch die Mitteilung des ausgewählten Außenleiters 12 und der Synchronisationszeitpunkte 15 synchron gehalten werden, auch wenn die Schweißstromquellen 1, 2 nach Abschluss der Übertragung des Referenzsignals 11 nicht mehr miteinander kommunizieren können. Das Wechselstromnetz 3 sorgt in weiterer Folge für die Synchronität, indem die Synchronisationseinheiten 16 der Schweißstromquellen 1, 2 auf die mittels Referenzsignal 11 mitgeteilten Synchronisationszeitpunkte 15 des Wechselstromnetzes 3 eingestellt wurden. Entsprechend wird der ausgewählten Außenleiter 12, auf welchen synchronisiert wurde, in den Schweißstromquellen 1, 2 gespeichert. Die Synchronisationsinformation 13 ist also in den Schweißstromquellen 1, 2 gespeichert. Dadurch ist die Synchronität der Schweißströme I₁, I₂ für alle Schweißvorgänge sichergestellt, solange die Schweißstromquellen 1, 2 mit dem Wechselstromnetz 3 verbunden bleiben und/oder die Phasenfolge nicht geändert wird. Durch die Synchronisation soll gewährleistet werden, dass die Schweißströme I₁, I₂ in Frequenz, Phasenwinkeln und Polarität synchron sind. Die Nulldurchgänge 14 stellen periodische Synchronisationszeitpunkte 15 im Spannungsverlauf U_{U,V,W} des ausgewählten Außenleiters 12 dar, mit denen die Schweißströme I₁, I₂ synchronisiert werden können. Die erste Schweißstromquelle 1 kann auf Grund Ihrer Rolle im Verfahren auch als "Master" oder "Lead" bezeichnet werden. Die Auswahl, welcher Außenleiter 4 und welche Nulldurchgänge 14 zur Synchronisation herangezogen werden soll, wird durch die erste Schweißstromquelle 1 getroffen. Der Spannungsverlauf U_{U,V,W} des ausgewählten Außenleiters 12 enthält sowohl Nulldurchgänge 14+ mit positiven Flanken als auch Nulldurchgänge 14- mit negativen Flanken. Im gezeigten Ausführungsbeispiel werden die Nulldurchgänge 14+ des Spannungsverlaufs U_{U} mit positiven Flanken als periodische Synchronisationszeitpunkte 15 genutzt.

Die Auswahl des Außenleiters 12 kann zufällig, nämlich durch die Reihenfolge der angeschlossenen Außenleiter 4 bei der Verbindung mit dem Wechselstromnetz 3, erfolgen. Die zweite Schweißstromquelle 2 synchronisiert sich auf Basis des Referenzsignals 11 mit der ersten Schweißstromquelle 1, indem die Polarität und die Phasenlage des auszugebenden, aber noch nicht erzeugten Schweißstromes I₂ der zweiten Schweißstromquelle 2 zu den Nulldurchgängen 14 der Außenleiter 4 schrittweise durchgeschaltet wird, bis der zu erzeugende Schweißstrom I₂ bzw. dessen Spannungsverlauf synchron zu dem Referenzsignal 11 ist. Am Ende der Synchronisation synchronisieren beide Schweißstromquellen 1,2 ihre auszugebenden Schweißströme I₁, I₂ mit dem gleichen Außenleiter 4 und den gleichen Nulldurchgängen 14+ des Spannungsverlaufs U_{U}. Die Frequenz und Phasenlage der zu erzeugenden Schweißströme I₂, I₂ wird vom ausgewählten Außenleiter 12 übernommen. Durch die Synchronisation auf die gleichen periodischen Synchronisationszeitpunkten 15, insbesondere Nulldurchgänge 14+, des ausgewählten Außenleiters 12 sind die Schweißströme I₁, I₂ in Frequenz, Phasenlage und Polarität synchron. Die auszugebenden Schweißströme I₁, I₂ müssen zur Synchronisation nicht tatsächlich erzeugt und ausgegeben werden.

Zunächst wird durch die erste Schweißstromquelle 1 ein Referenzsignal 11 mit einer Synchronisationsinformation 13 erzeugt und ausgegeben (Fig. 4A). Die Synchronisationsinformation 13 enthält dabei unter anderem die Informationen, welcher Außenleiter 4 (der ausgewählte Außenleiter 12) und welche Nulldurchgänge 14+ (positive Flanke) bzw. 14- (negative Flanke) zur Synchronisation verwendet werden. Im gezeigten Ausführungsbeispiel werden die Nulldurchgänge 14+ des Spannungsverlaufs U_{U} mit positiven Flanken als periodische Synchronisationszeitpunkte 15 genutzt. Weiters kann die Synchronisationsinformation 13 die Amplitude des Schweißstroms I₂ und die Form des Schweißstromes I₂ enthalten. Das Referenzsignal 11 ist dabei bevorzugt nicht der Schweißstrom, sondern weist einen deutlich niedrigeren Pegel auf - beispielsweise 5 A. Die Synchronisationsinformation 13 kann insbesondere im zeitlichen Verlauf des Referenzsignals 11, beispielsweise in den Flanken oder Nulldurchgängen 14'+ oder 14'- des Referenzsignals, enthalten sein. Das Referenzsignal 11 ist auf den Spannungsverlauf U_{U,V,W} des ausgewählten Außenleiters 12 in Bezug auf die Periodendauer bzw. Frequenz abgestimmt und mit dieser synchronisiert. Im vorliegenden Fall ist das Referenzsignal 11 wie dargestellt zum ausgewählten Außenleiter 12 in der Periode T synchron. Ein mögliches Tastverhältnis des Referenzsignals 11, wie in den Figuren dargestellt, ist abhängig von Benutzereinstellungen an den Schweißstromquellen 1, 2. Das Tastverhältnis kann unterschiedlich sein und hat keinen Einfluss auf die Synchronisation. Vorzugsweise ist das Tastverhältnis, also das Verhältnis der Dauer der positiven und negativen Phase der beiden Schweißströme 1, 2, identisch eingestellt. Das Tastverhältnis der Schweißströme I₁, I₂ hat Einfluss auf den Wärmeeintrag in die Schweißnaht bzw. auf die Reinigungszone der Schweißnaht während des Schweißprozesses. Dies wird entsprechend abhängig von der Anwendung vom Benutzer eingestellt. Bevorzugt ist diese Information in dem Referenzsignal 11 enthalten, sodass beide Schweißstromquellen 1, 2 identisch eingestellt sind. Das Referenzsignal 11 ist im gezeigten Fall ein Rechtecksignal, das hinsichtlich der Periodendauer und Frequenz mit dem Spannungsverlauf des ausgewählten Außenleiters 12 übereinstimmt und somit synchron ist. Die Nulldurchgänge 14'+ des Referenzsignals 11 stimmen zeitlich mit den Nulldurchgängen 14+ des Spannungsverlaufs des ausgewählten Außenleiters 12 überein. Die Nulldurchgänge 14'+ des Referenzsignals 11 markieren periodische Synchronisationszeitpunkte 15 im Spannungsverlauf des ausgewählten Außenleiters 12, mit denen die Schweißströme I₁, I₂ synchronisiert werden sollen. Die Phasenlagen des Spannungsverlaufs U_{U} des ausgewählten Außenleiters 12 und des Referenzsignals 11 stimmen daher überein. Mit dem Referenzsignal 11 ist der ausgewählte Außenleiter 12 eindeutig durch die zweite Schweißstromquelle 2 identifizierbar, also von den anderen Außenleitern 4 unterscheidbar. Das Referenzsignal 11 kann über die Schweißbrenner 8 an die zweite Schweißstromquelle 2 übermittelt werden. Die zweite Schweißstromquelle 2 kann das Referenzsignal 11 auswerten und feststellen, welcher Außenleiter 4 und welche Nulldurchgänge (im vorliegenden Fall die Nulldurchgänge 14+) zur Synchronisation der Schweißströme I₁, I₂ von der ersten Schweißstromquelle 1 ausgewählt wurde. Die Feststellung, welcher Außenleiter 4 bzw. welche Nulldurchgänge 14 ausgewählt wurden, kann durch Vergleich des Referenzsignals 11 mit den Spannungsverläufen U_{U,V,W} der Außenleiter 4 erfolgen. Der Vergleich kann nacheinander erfolgen, also Außenleiter 4 für Außenleiter 4. Dabei wird das Referenzsignal 11 jeweils mit einem Spannungsverlauf U_{U,V,W} eines Außenleiters 4 verglichen. Der Vergleich findet zumindest einmal, beispielsweise fünf Mal, statt. Falls der Vergleich negativ ausfällt (wie z.B. in Fig. 4B dargestellt), wird der nächste Außenleiter 4 herangezogen bzw. von der zweiten Schweißstromquelle 2 auf den nächsten Außenleiter 4 umgeschaltet und mit dem Referenzsignal 11 verglichen. In Fig. 4B ist unten eine Fehlsynchronisation der zweiten Schweißstromquelle 2 dargestellt, bei der die zweite Schweißstromquelle 2 auf den Außenleiter 4 mit der Spannung U_{W} synchronisiert ist. Der Außenleiter 4 mit der Spannung U_{W} ist jedoch nicht mit dem Referenzsignal 11 synchron. Sobald der richtige Außenleiter 4 identifiziert wurde, kann mehrmals, beispielsweise fünf Mal hintereinander, kontrolliert werden, ob es sich um den richtigen Außenleiter 4 und die richtigen Nulldurchgänge 14+ handelt. Dadurch werden Fehlsynchronisationen vermieden. Anschließend werden beide Schweißströme I₁, I₂ mit dem gleichen Außenleiter 4, insbesondere mit den gleichen periodischen Synchronisationszeitpunkten 15 bzw. Nulldurchgängen 14, synchronisiert, aber noch nicht ausgegeben. Wenn ein simultaner Schweißprozess gestartet wird, können die synchronisierten Schweißströme I₁, I₂ ausgegeben werden. Dies ist in Fig. 4C dargestellt. Zusammenfassend wurde also von der ersten Schweißstromquelle 1 ein Außenleiter 12 ausgewählt und ein Referenzsignal 11 erzeugt, das auf den ausgewählten Außenleiter 12 und bestimmten periodischen Synchronisationszeitpunkten 15 (die Nulldurchgänge 14+) im Spannungsverlauf U_{U,V,W} des ausgewählten Außenleiters 12 abgestimmt ist. Das Referenzsignal 11 wurde zur zweiten Schweißstromquelle 2 übertragen und auf Basis des Referenzsignals 11 der ausgewählte Außenleiter 12 und die bestimmten periodischen Synchronisationszeitpunkte 15 im Spannungsverlauf U_{U,V,W} des ausgewählten Außenleiters 12 durch die zweite Schweißstromquelle 2 identifiziert. Anschließend wurden die Schweißströme der ersten 1 und der zweiten Schweißstromquelle 2 mit dem ausgewählten Außenleiter 12 und den im Spannungsverlauf U_{U,V,W} enthaltenen periodischen Synchronisationszeitpunkte 15 synchronisiert. Nach der Synchronisation können die Schweißströme I₁, I₂ ausgegeben werden.

Um das beschriebene Verfahren auszuführen, können zwei gleichartige Schweißstromquellen 1, 2 verwendet werden. Diese können jeweils zwischen einem ersten Modus und einem zweiten Modus umschaltbar sein. In einem ersten Modus kann das Referenzsignal 11 erzeugt und an eine Schweißstromquelle im zweiten Modus übertragen werden. Alternativ kann auch vorgesehen sein, dass die Schweißstromquellen nicht umschaltbar sind. Zur Ausführung des Verfahrens muss dann eine Schweißstromquelle 1, die im ersten Modus betreibbar ist, und eine Schweißstromquelle, die im zweiten Modus betreibbar ist, verwendet werden.

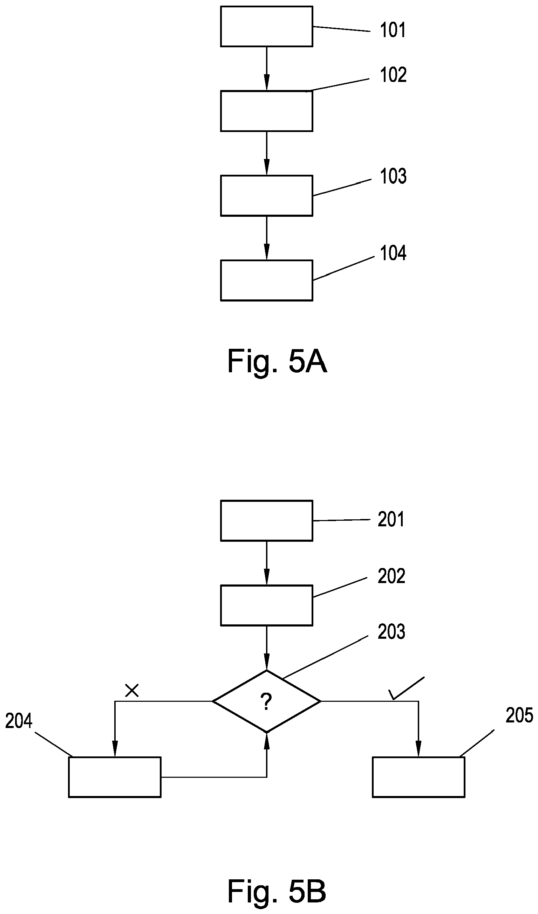

Fig. 5A zeigt den Verfahrensablauf zur Synchronisation von Schweißströmen I₁, I₂ aus der Sicht der ersten Schweißstromquelle 1 im ersten Modus. In Schritt 101 wird das Verfahren gestartet. In Schritt 102 wird geprüft, ob die Schweißbrenner 8 der Schweißstromquellen 1, 2 in elektrischen Kontakt stehen und ein elektrischer Strom fließt. In Schritt 103 wird ein Referenzsignal 11 ausgegeben, das mit dem Spannungsverlauf des ausgewählten Außenleiter 12 in der Periode im Wesentlichen synchron ist. Mit dem Referenzsignal 11 können ein ausgewählter Außenleiter 12 und periodische Synchronisationszeitpunkte 15 von der zweiten Schweißstromquelle 2 identifiziert werden. Die Auswahl des Außenleiters 4 kann zufällig, zum Beispiel durch Anschließen der Schweißstromquelle 2 an das Wechselstromnetz 3, oder gezielt erfolgen. Das Referenzsignal 11 kann beispielsweise für eine bestimmte Zeitdauer ausgegeben werden. In Schritt 104 ist das Verfahren von Seiten der ersten Schweißstromquelle 1 beendet.

Fig. 5B zeigt parallel dazu den Verfahrensablauf der zweiten Schweißstromquelle 2 im zweiten Modus. In Schritt 201 wird das Verfahren gestartet. In Schritt 202 wird geprüft, ob die Schweißbrenner 8 in elektrischem Kontakt stehen und ein elektrischer Strom fließt. In Schritt 203 wird das Referenzsignal 11 gemessen, ausgewertet und mit dem Spannungsverlauf eines Außenleiters 4 verglichen. Wenn das Referenzsignal 11 nicht mit dem verglichenen Außenleiter 4 synchron ist (dargestellt durch das X), wird in Schritt 204 auf den nächsten Außenleiter 4 umgeschaltet und Schritt 203 erneut durchgeführt. Wenn der ausgewählte Außenleiter 12 identifiziert wurde (dargestellt durch das Häkchen), wird das Verfahren auch von Seiten der zweiten Schweißstromquelle 2, gegebenenfalls nach mehrmaliger Verifikation, beendet (Schritt 205).

## Patentansprüche

1. Verfahren zur Synchronisation von Schweißströmen (I₁, I₂) zumindest zweier Schweißstromquellen (1, 2) vor Durchführung eines simultanen Schweißprozesses an zumindest einem Werkstück (10, 10'), insbesondere eines Schweißprozesses mit nichtabschmelzbaren Elektroden (9), wobei das Verfahren folgende Schritte aufweist:
- Ausgeben eines Referenzsignals (11) durch eine erste Schweißstromquelle (1), wobei das Referenzsignal (11) eine Synchronisationsinformation (13) enthält;
- Messen oder Empfangen des Referenzsignals (11) und Auswerten der im Referenzsignal (11) enthaltenen Synchronisationsinformation (13) durch eine zweite Schweißstromquelle (2);
- Synchronisieren eines zweiten Schweißstromes (I₂) der zweiten Schweißstromquelle (2) mit einem ersten Schweißstrom (I₁) der ersten Schweißstromquelle (1) auf Basis der Synchronisationsinformation (13).

2. Verfahren nach Anspruch 1, **dadurch gekennzeichnet, dass** nach der Synchronisation der erste (I₁) und der zweite Schweißstrom (I₂) erzeugt werden und der Schweißprozess durchgeführt wird.

3. Verfahren nach Anspruch 1 oder 2, **dadurch gekennzeichnet, dass** die Synchronisationsinformation (13) in einem zeitlichen Verlauf des Referenzsignals (11), insbesondere in einer Frequenz, in einer wechselnden Polarität und/oder in einem Phasenwinkel (ϕ) des Referenzsignals (11), enthalten ist.

4. Verfahren nach einem der Ansprüche 1 bis 3, **dadurch gekennzeichnet, dass** die Schweißstromquellen (1, 2) an ein gemeinsames Wechselstromnetz (3), insbesondere an ein dreiphasiges Wechselstromnetz (3), angeschlossen werden und zur Synchronisation der Schweißstromquellen (1, 2) ein Außenleiter (12) des Wechselstromnetzes (3) für die erste Schweißstromquelle (1) ausgewählt wird und das Referenzsignal (11) auf Basis eines Spannungsverlaufs (U_{U,V,W}) des ausgewählten Außenleiters (12) erzeugt wird, sodass die Synchronisationsinformation (13) eine Identifikation des ausgewählten Außenleiters (12) durch die zweite Schweißstromquelle (2) ermöglicht.

5. Verfahren nach Anspruch 4, **dadurch gekennzeichnet, dass** der erste Schweißstrom (I₁) und der zweite Schweißstrom (I₂) mit dem Spannungsverlauf (U_{U,V,W}) des ausgewählten Außenleiters (12), vorzugsweise mit einem periodischen Synchronisationszeitpunkt (15) im Spannungsverlauf (U_{U,V,W}) des ausgewählten Außenleiters (12), beispielsweise einem periodischen Nulldurchgang (14), synchronisiert werden.

6. Verfahren nach Anspruch 4 oder 5, **dadurch gekennzeichnet, dass** das Referenzsignal (11) einen zeitlichen Verlauf, insbesondere eine Frequenz, eine Polarität und eine Phasenlage, aufweist, auf deren Basis der ausgewählte Außenleiter (12) eindeutig identifizierbar ist.

7. Verfahren nach einem der Ansprüche 4 bis 6, **dadurch gekennzeichnet, dass** die im Referenzsignal (11) enthaltene Synchronisationsinformation (13) die Identifikation eines periodischen Synchronisationszeitpunkts (15), beispielsweise eines periodischen Nulldurchgangs (14), im Spannungsverlauf des ausgewählten Außenleiter (12) ermöglicht.

8. Verfahren nach einem der Ansprüche 4 bis 7, **dadurch gekennzeichnet, dass** die Synchronisationsinformation (13) aus dem Spannungsverlauf (U_{U,V,W}) des ausgewählten Außenleiters (12), insbesondere aus der Frequenz, der Polarität und/oder dem Phasenwinkel des ausgewählten Außenleiters (12), abgeleitet wird.

9. Verfahren nach einem der Ansprüche 4 bis 8, **dadurch gekennzeichnet, dass** ein Verlauf des Referenzsignals (11) in Frequenz, Polarität und/oder Phasenwinkel mit dem Spannungsverlauf (U_{U,V,W}) des ausgewählten Außenleiters (12) synchronisiert wird.

10. Verfahren nach einem der Ansprüche 1 bis 9, **dadurch gekennzeichnet, dass** das Referenzsignal (11) von der ersten Schweißstromquelle (1) über einen an die erste Schweißstromquelle (1) angeschlossenen ersten Schweißbrenner (8), direkt oder indirekt an einen an die zweite Schweißstromquelle (2) angeschlossenen zweiten Schweißbrenner (8) und weiter an die zweite Schweißstromquelle (2) geleitet wird.

11. Verfahren nach einem der Ansprüche 1 bis 10, **dadurch gekennzeichnet, dass** die Stromstärke und die Spannungshöhe des Referenzsignals (11) so gewählt werden, dass ein Aufschmelzen des Werkstückes (10, 10'), eines Schweißdrahtes oder von Elektroden (9) eines Schweißbrenners (8) verhindert wird.

12. Verfahren nach einem der Ansprüche 1 bis 11, **dadurch gekennzeichnet, dass** das Referenzsignal (11) ein Spannungssignal, vorzugsweise ein Wechselsignal, insbesondere ein Rechtecksignal, ist.

13. Schweißstromquelle (1, 2) zur Durchführung eines simultanen Schweißprozesses an zumindest einem Werkstück (10, 10'), insbesondere eines Schweißprozesses mit nichtabschmelzbaren Elektroden (9), **dadurch gekennzeichnet, dass** die Schweißstromquelle (1, 2) eine Synchronisationseinheit (16) aufweist, welche dazu eingerichtet ist, in einem ersten Modus zur Synchronisation mit einer weiteren gleichartigen Schweißstromquelle (1, 2) ein Referenzsignal (11) mit einer Synchronisationsinformation (13) zu erzeugen und an die weitere Schweißstromquelle (2) auszugeben, und/oder in einem zweiten Modus ein von der weiteren Schweißstromquelle (1, 2) ausgegebenes Referenzsignal (11) zu messen oder zu empfangen und die in dem Referenzsignal (11) enthaltene Synchronisationsinformation (13) auszuwerten und auf deren Basis einen Schweißstrom (I₁, I₂) mit einem Schweißstrom (I₁, I₂) der weiteren Schweißstromquelle (1, 2) vor Durchführung des Schweißprozesses zu synchronisieren.

14. Schweißstromquelle (1, 2) nach Anspruch 13, **dadurch gekennzeichnet, dass** die Synchronisationseinheit (16) im ersten Modus dazu eingerichtet ist, das Referenzsignal (11) auf Basis eines Spannungsverlaufs (U_{U,V,W}) eines ausgewählten Außenleiters (12) eines Wechselstromnetzes (3) zu erzeugen.

15. System bestehend aus zumindest zwei Schweißstromquellen (1, 2), wobei die Schweißstromquellen (1, 2) jeweils nach Anspruch 13 oder 14 ausgebildet sind und eine der beiden Schweißstromquellen (1) im ersten Modus betrieben wird und die andere Schweißstromquelle (2) im zweiten Modus betrieben wird.
